# EUROPÄISCHE PATENTSCHRIFT

(11) **EP 3 918 410 B1**
(45) Veröffentlichungstag und Bekanntmachung des Hinweises auf die Patenterteilung: **15.10.2025**
(21) Anmeldenummer: 19832048.3
(22) Anmeldetag: 17.12.2019
(51) Int. Cl.: G02B 27/10, G02B 27/42, H01S 3/082, H01S 3/23, H01S 3/00

(54) **VORRICHTUNG ZUR KOMBINATION VON WENIGSTENS ZWEI LASERSTRAHLEN**
DEVICE FOR COMBINING AT LEAST TWO LASER BEAMS
DISPOSITIF DE COMBINAISON D'AU MOINS DEUX RAYONS LASER

(30) Priorität: 31.01.2019 DE 102019102488
(43) Veröffentlichungstag der Anmeldung: 08.12.2021
(73) Patentinhaber: Rheinmetall Waffe Munition GmbH, 29345 Südheide (DE)
(72) Erfinder: LUDEWIGT, Klaus, 21033 Hamburg (DE)
(74) Vertreter: DREISS Patentanwälte PartG mbB
(86) Internationale Anmeldenummer: PCT/EP2019/085523
(87) Internationale Veröffentlichungsnummer: WO 2020/156730

(56) Entgegenhaltungen:
- WO-A1-2012/042186
- US-A- 4 655 547
- US-A1- 2009 153 968
- MADASAMY P ET AL: "Dual-Grating Spectral Beam Combination of High-Power Fiber Lasers", IEEE JOURNAL OF SELECTED TOPICS IN QUANTUM ELECTRONICS, IEEE SERVICE CENTER, PISCATAWAY, NJ, US, vol. 15, no. 2, 1 March 2009 (2009-03-01), pages 337 - 343, XP011344177, ISSN: 1077-260X, DOI: 10.1109/JSTQE.2008.2012266

## Beschreibung

Die Erfindung betrifft das Problem der Kombination von wenigstens zwei Eingangslaserstrahlen zu einem Wirkstrahl mit hoher Leistung und hoher Strahlqualität. Derartige Techniken finden beispielsweise zur Erzeugung von Hochleistungs-Laserstrahlung z.B. für Zwecke der Materialbearbeitung Verwendung.

Zur Kombination von Einzelstrahlen sind verschiedene Techniken bekannt. Einzelstrahlen mit verschiedenen Wellenlängen können durch das Prinzip der spektralen Kopplung zu einem Ausgangsstrahl vereinigt werden. Hierzu kann ein optisches Kopplungselement verwendet werden, welches spektral selektiv wirkt und separat einfallende Eingangsstrahlen mit verschiedenen Wellenlängen zu einem gemeinsamen Ausgangsstrahl vereinigt. Insbesondere kann die wellenlängenabhängige Beugung von Licht an einem diffraktiven optischen Element ausgenutzt werden (d.h. die Wellenlängenabhängigkeit des Beugungswinkels an dem diffraktiven optischen Element). Der Ausgangsstrahl ist dann breitbandig und beinhaltet als spektrale Komponenten die Wellenlängen der Eingangsstrahlen. Für viele Anwendungsbereiche ergeben sich hierdurch keine Nachteile, insbesondere wenn in erster Linie die Leistungsdichte und/oder Intensität des Ausgangsstrahles von Relevanz ist. Von Bedeutung für die Nutzbarkeit des Ausgangsstrahles ist jedoch oftmals die Strahlqualität. Wenn möglich soll die Strahlqualität der Eingangsstrahlen bei Kombination zu dem Ausgangsstrahl weitgehend erhalten bleiben.

Sehr gut handhabbare Laserquellen sind beispielsweise Faserlaser. Hierbei handelt es sich um Festkörperlaser, bei denen das aktive Medium von einer entsprechend ausgebildeten lichtleitenden Faser (z.B. dotierte Glasfaser) bereitgestellt wird. Solche Faserlaser können Laserstrahlung mit hoher Strahlqualität liefern. Im Single-Mode-Betrieb (insbesondere in Grundmode) ist hierbei eine Strahlqualität M² kleiner als 1,2 realisierbar. Faserlaser zeichnen sich auch durch hohe Lebensdauern und einem unempfindlichen Aufbau aus, sowie vorteilhafte Eigenschaften und gute Kühlbarkeit des aktiven Mediums und die Möglichkeit zum Dauerbetrieb.

Aus prinzipiellen Gründen haben Laserlichtquellen in der Praxis eine gewisse Bandbreite. Insbesondere bei den genannten Faserlasern ist diese Bandbreite erheblich und auch im Betrieb mit der Grundmode vorhanden. Bei Faserlasern nimmt die Bandbreite der erzeugten Strahlung grundsätzlich mit zunehmender Leistung zu. Hierzu können verschiedene Effekte beitragen, insbesondere nicht-lineare Wechselwirkungen in der Verstärkerfaser (z.B. stimulierte Brillouin-Streuung, stimulierte Raman-Streuung oder Selbstphasenmodulation).

Eine nicht-ideale Bandbreite führt bei der eingangs genannten Strahlkombination mittels spektraler Kopplung zu einer Beeinträchtigung der Strahlqualität des Ausgangsstrahles. Dies ist u.a. darauf zurückzuführen, dass ein diffraktives optisches Element einen Eingangsstrahl mit einer Bandbreite aufgrund der Wellenlängenabhängigkeit der Streuung mit einer zusätzlichen Divergenz versieht. Insofern führt eine nichtverschwindende Bandbreite in diesem Fall zu einem deformierten Strahlquerschnitt, was ohne Kompensationsmaßnahme die Strahlqualität des Ausgangsstrahles verschlechtert.

Die Druckschrift US 2009/153968 A1 offenbart eine bekannte Vorrichtung zur Kombination von Eingangslaserstrahlen.

Mit der vorliegenden Erfindung soll die Erzeugung von hochintensiver Laserstrahlung mit sehr guter Strahlqualität durch Kombination mehrerer Eingangsstrahlen ermöglicht werden, wobei insbesondere die Verwendung von Laserstrahlungsquellen mit nicht-idealer Bandbreite möglich sein soll und dennoch ein Ausgangsstrahl mit guter Strahlqualität erzielbar sein soll. Insbesondere soll auch die Verwendung von Faserlasern als Input-Laserstrahlquellen ermöglicht werden.

Diese Aufgabe wird durch eine Vorrichtung zur Kombination von wenigstens zwei Eingangslaserstrahlen mit den Merkmalen des Anspruchs 1 gelöst. Jeder der Eingangslaserstrahlen weist eine spektrale Bandbreite auf und umfasst dementsprechend verschiedene Spektralkomponenten mit jeweils verschiedenen Wellenlängen. Die Wellenlängen des Eingangslaserstrahls liegen insofern in einem durch die Bandbreite charakterisierten Wellenlängenbereich. Die Vorrichtung umfasst zumindest eine Vorkompensationseinheit (insbesondere mehrere Vorkompensationseinheiten) und eine im Strahlengang nachgeordnete Kombinationseinheit.

Die wenigstens eine Vorkompensationseinheit erfasst einen oder mehrere Eingangslaserstrahlen. Die Vorkompensationseinheit weist wenigstens eine diffraktive (d.h. beugend wirkende) Optik auf, welche den jeweiligen Eingangslaserstrahl in ein zugeordnetes, verbreitertes Zwischenstrahlbündel aufweitet.

Die Kombinationseinheit ist derart angeordnet, dass sie die von den Eingangslaserstrahlen gespeisten Zwischenstrahlbündel erfasst. Die Kombinationseinheit weist wenigstens ein erstes diffraktives optisches Element (DOE) und ein zweites diffraktives optisches Element (DOE) auf, wobei das zweite diffraktive optische Element dem ersten diffraktiven optischen Element im Strahlengang nachgeordnet ist. Dabei ist die Kombinationseinheit derart auf die wenigstens eine Vorkompensationseinheit abgestimmt, dass das erste diffraktive optische Element jeweils ein Zwischenstrahlbündel durch Beugung in ein konvergentes Strahlbündel mit einer Strahltaille umformt. Außerdem sind die diffraktiven optischen Elemente derart angeordnet und ausgebildet, dass die genannte Strahltaille auf dem zweiten diffraktiven optischen Element liegt (d.h. von dem zweiten diffraktiven optischen Element erfasst wird). Das zweite diffraktive optische Element ist dann wiederum derart ausgebildet und angeordnet, dass sämtliche einfallenden Spektralkomponenten in eine gemeinsame Abstrahlrichtung umgelenkt werden.

Die Vorkompensationseinheit erzeugt insofern eine räumliche Strahlverbreiterung in Abhängigkeit der spektralen Bandbreite des jeweiligen Eingangslaserstrahls, wobei die einzelnen Wellenlängenkomponenten entlang einer Aufweitungsrichtung mit steigender Wellenlänge sortiert angeordnet sind. Insofern ist das Zwischenstrahlbündel im Vergleich zu dem Eingangslaserstrahl räumlich verbreitert und die Aufweitung erfolgt derart, dass die Spektralkomponenten derart räumlich sortiert sind und dass die verschiedenen Spektralkomponenten mit steigender Wellenlänge nebeneinander räumlich verlaufend angeordnet sind. Mit anderen Worten weisen die verschiedenen Spektralkomponenten in dem Zwischenstrahlbündel einen räumlichen Strahlversatz in Abhängigkeit zum spektralen Abstand voneinander auf. Insbesondere verlaufen die Spektralkomponenten des Strahls in einer Ebene nebeneinander, d.h. der Strahl ist vorzugsweise derart aufgeweitet, dass die Spektralkomponenten entlang der Aufweitungsrichtung auseinandergezogen und mit steigender Wellenlänge sortiert angeordnet sind. Kurzwellige Anteile liegen insofern tendenziell auf einer Seite des Zwischenstrahlbündels, langwellige Anteile tendenziell auf der anderen Seite des Zwischenstrahlbündels.

Die Kombinationseinheit ist dann derart ausgebildet und angeordnet, dass sie die nebeneinander verlaufenden Spektralkomponenten erfasst, wobei das erste diffraktive optische Element (DOE) die Spektralkomponenten alle zu einer gemeinsamen Strahltaille hin beugt. Die Strahltaille ist insofern ein Konvergenzbereich des Bündels der verschiedenen Spektralkomponenten. Bei geeigneter Anpassung von Vorkompensationseinheit und Kombinationseinheit aneinander kann dies durch die zugrundeliegenden Beugungseffekte erreicht werden. Zwar treffen die verschiedenen Spektralkomponenten aufgrund der räumlichen Aufweitung in dem Zwischenstrahlbündel an verschiedenen Positionen auf das erste diffraktive optische Element (DOE) der Kombinationseinheit. Allerdings ist das erste diffraktive optische Element dann insbesondere derart ausgebildet, dass die wellenlängenabhängige Ablenkung gerade derart erfolgt, dass die an den verschiedenen Positionen gebeugten Spektralkomponenten wieder in der Strahltaille zusammenlaufen.

Das zweite diffraktive optische Element (DOE) der Kombinationseinheit ist dann vorzugsweise derart auf die Vorkompensationseinheit und das erste diffraktive optische Element abgestimmt, dass die verschiedenen Spektralkomponenten alle in dieselbe Richtung (nämlich die Abstrahlrichtung) gebeugt werden. Zwar treffen die verschiedenen Spektralkomponenten unter verschiedenen Winkeln auf das zweite diffraktive optische Element der Kombinationseinheit auf. Allerdings liegt die Strahltaille der konvergent verlaufenden Spektralkomponenten auf dem zweiten diffraktiven optischen Element. Dadurch werden alle Spektralkomponenten wieder zu einem Ausgangsstrahl vereinigt. Dies geschieht insgesamt für die Spektralkomponenten der wenigstens zwei Eingangslaserstrahlen, so dass sämtliche Eingangslaserstrahlen zu einem gemeinsamen Ausgangsstrahl kombiniert werden.

Insgesamt kann durch das Zusammenspiel von Vorkompensationseinheit und Kombinationseinheit die Strahlverbreiterung entsprechend der spektralen Bandbreite rückgängig gemacht werden. Dieses Prinzip nutzt Beugungseffekte auf und das Strahlparameterprodukt bzw. die Strahlqualität M² bleiben im Wesentlichen unbeeinträchtigt. Insbesondere kann der Ausgangsstrahl eine Strahlqualität aufweisen, welche der Strahlqualität der Eingangslaserstrahlen im Wesentlichen entspricht. Zusätzlich zu der intrinsischen (beugungsbegrenzten) Divergenz der Laserstrahlen wird keine zusätzliche Strahlverbreiterung oder Divergenz eingebracht.

Die Erfindung ermöglicht somit die Speisung eines Hochleistungs-Wirkstrahls mit mehreren Eingangslaserstrahlen, auch wenn diese eine nicht ideale Bandbreite aufweisen. Die Eingangslaserstrahlen können daher auch bei hohen Leistungen durch Faserlaser bereitgestellt werden. Die beteiligten optischen Elemente können insbesondere durch Gitter (Beugungsgitter) und ggf. Planspiegel aufgebaut werden. Solche Bauteile sind mit hoher Genauigkeit herstellbar und auch für hohe Strahlungsleistungen im Dauerbetrieb geeignet. Vorteilhafterweise ist die Vorkompensationseinheit derart ausgebildet und derart auf die Wellenlänge des Eingangslaserstrahls abgestimmt, dass sämtliche Spektralkomponenten in dem Zwischenstrahlbündel parallel zueinander entlang einer Hauptrichtung verlaufen. Zwar hat der Eingangslaserstrahl und somit auch jede Spektralkomponente beugungsbedingt meist eine intrinsische Divergenz, welche durch die Strahlqualität bzw. das Strahlparameterprodukt charakterisiert ist. Die effektive Ausbreitungsrichtung einer Spektralkomponente kann aber z.B. als Integral über alle Richtungskomponenten der lokalen Poynting-Vektoren der verschiedenen Spektralkomponenten definiert werden. Die Vorkompensationseinheit ist vorzugsweise derart ausgebildet, dass die Vorzugsrichtungen sämtlicher Spektralkomponenten parallel zueinander verlaufen, d.h. dass das Zwischenstrahlbündel mit räumlich nebeneinander liegenden Spektralkomponenten parallelisiert ist.

Die Vorkompensationseinheit umfasst mehrere diffraktive optische Element (DOE).

Erfindungsgemäß weist die Vorkompensationseinheit wenigstens ein erstes und ein zweites diffraktives optisches Element auf.

Insbesondere ist dabei das erste diffraktive optische Element derart ausgebildet, dass die unterschiedlichen Spektralkomponenten des Eingangslaserstrahls derart in unterschiedliche Richtungen gebeugt werden, dass im Strahlengang zwischen dem ersten und dem zweiten diffraktiven optischen Element ein divergentes Strahlbündel gebildet wird. Insofern fächert das erste diffraktive optische Element den breitbandigen Eingangslaserstrahl in seine Spektralkomponenten auf. Das erste diffraktive optische Element ist insbesondere derart ausgebildet, dass für jede Spektralkomponente eine bestimmte Beugungsordnung (vorzugsweise erste Beugungsordnung), welche für die Speisung des Zwischenbündels genutzt wird, einen unterschiedlichen Beugungswinkel aufweist.

Zur weiteren Ausgestaltung ist das zweite diffraktive optische Element der Vorkompensationseinheit dann derart ausgebildet und angeordnet, dass die unterschiedlichen Spektralkomponenten des divergenten Strahlbündels sämtlich in dieselbe Richtung (nämlich die oben genannte Hauptrichtung) umgelenkt bzw. gebeugt werden. Aufgrund des divergenten Verlaufes vor dem zweiten diffraktiven optischen Element treffen die verschiedenen Strahlkomponenten dabei an unterschiedlichen Positionen und unter unterschiedlichen Winkeln auf das zweite diffraktive optische Element. Da Beugungseffekte aber wellenlängenabhängig sind, können die diffraktiven optischen Elemente derart aufeinander abgestimmt werden, dass die Beugungsrichtungen am zweiten diffraktiven Zwischenelement für alle Spektralkomponenten gleich sind. Aufgrund der unterschiedlichen Auftreffposition laufen dann die Spektralkomponenten räumlich versetzt zueinander und parallel in dem Zwischenbündel.

Nach einem allgemeinen Aspekt der Erfindung ist die Vorkompensationseinheit derart ausgebildet, dass das Zwischenstrahlbündel eine räumliche Breite aufweist, welche umso größer ist, je größer die Bandbreite des Eingangslaserstrahles ist. Insbesondere ist die räumliche Breite proportional zur Bandbreite des Eingangslaserstrahls, was z.B. bei Beugung an einem Gitter im Bereich kleiner Winkel realisiert werden kann. Unter der räumlichen Breite wird im vorliegenden Zusammenhang die Ausdehnung des Zwischenstrahlbündels senkrecht zur Hauptrichtung (siehe oben) definiert. Zwar führt die intrinsische Strahldivergenz des Eingangslaserstrahls ebenfalls zu einer Verbreiterung des Strahlquerschnitts entlang des Strahlverlaufs, die jedoch für die Zwecke der Interpretation der genannten Merkmalsgruppe nicht berücksichtigt wird.

Die diffraktive Optik der Vorkompensationseinheit bzw. die darin enthaltenen diffraktiven optischen Elemente, sowie die diffraktiven optischen Elemente der Kombinationseinheit sind im Allgemeinen optische Beugungselemente, die beugungsbedingt eine wellenlängenabhängige Strahlablenkung erzeugen. Nach einer vorteilhaften Ausgestaltung weisen das erste diffraktive optische Element und das zweite diffraktive optische Element der Vorkompensationseinheit übereinstimmende Winkeldispersionen auf. Die Winkeldispersion bezeichnet insbesondere die Abhängigkeit des Beugungswinkels von der Wellenlänge, oder die Änderung des Beugungswinkels nach der Wellenlänge. Die Winkeldispersion gibt ein Maß für die Wellenlängenaufspaltung einer polychromatischen Welle durch das diffraktive optische Element an. Insbesondere ist die Winkeldispersion als Änderung des Beugungswinkels (α) nach der Wellenlänge (λ) definiert: Winkeldispersion w_{d} = dα/dλ.

Das erste diffraktive optische Element und das zweite diffraktive optische Element können beispielsweise als Reflexionsgitter ausgebildet sein. Denkbar ist jedoch auch eine Ausgestaltung als Transmissionsgitter. Hier können verschiedene Kombinationen von Reflexionsgittern und Transmissionsgitter vorteilhaft sein. Beispielsweise können beide Gitter vom selben Typ sein (Reflexion oder Transmission). Die Verwendung von zwei Reflexionsgittern ermöglicht einen gefalteten Strahlverlauf und somit eine geringe Baulänge oder allgemein einen geringen Bauraum. Wenn eines der beiden diffraktiven optischen Elemente oder beide diffraktiven optischen Elemente als Transmissionsgitter ausgebildet sind, kann ggf. eine Justierung der Vorrichtung vereinfacht werden.

Bei Verwendung von Gittern ist es insbesondere vorteilhaft, wenn das erste diffraktive optische Element und das zweite diffraktive optische Element übereinstimmende Gitterkonstanten aufweisen. Da im Allgemeinen die Beugungswinkel von der Gitterkonstante und der Wellenlänge abhängen, können so diffraktive optische Elemente mit übereinstimmender Winkeldispersion bereitgestellt werden.

In der Vorkompensationseinheit sind vorzugsweise das erste diffraktive optische Element und das zweite diffraktive optische Element derart in Bezug aufeinander ausgerichtet und derart ausgebildet, dass bei Beugung des Eingangslaserstrahles an dem ersten diffraktiven optischen Element für sämtliche Spektralkomponenten des Eingangslaserstrahles jeweils die ersten Beugungsordnungen von dem zweiten diffraktiven optischen Element erfasst werden (d.h. auf das zweite diffraktive optische Element treffen). Hierzu ist insbesondere die Ausdehnung und die relative Anordnung der diffraktiven optischen Elemente zueinander an den Eingangslaserstrahl und an dessen Bandbreite angepasst.

Der Eingangslaserstrahl wird insbesondere entlang einer Einstrahlrichtung auf das erste diffraktive optische Element eingestrahlt und dort gebeugt. Für die verschiedenen Spektralkomponenten trifft jeweils die erste Beugungsordnung aufgrund der Winkeldispersion unter verschiedenen Beugungswinkeln auf das zweite diffraktive optische Element. Das zweite diffraktive optische Element ist dann vorzugsweise so bemessen und ausgerichtet, dass es die erste Beugungsordnung aller Spektralkomponenten aufnimmt und in das Zwischenstrahlbündel beugt.

Zur weiteren Ausgestaltung sind auch das erste und zweite diffraktive optische Element der Kombinationseinheit derart in Bezug aufeinander ausgerichtet und ausgebildet, dass bei Beugung des Zwischenbündels an dem ersten diffraktiven optischen Element für sämtliche Spektralkomponenten die erste Beugungsordnung von dem zweiten diffraktiven optischen Element der Kombinationseinheit erfasst werden. Dadurch sind die Beugungswinkel der verschiedenen diffraktiven optischen Elemente automatisch derart aufeinander abgestimmt, dass der vorkompensierte und aufgeweitete Strahl (Zwischenbündel) automatisch wieder zu einem Strahl mit hoher Strahlqualität und kleinem Strahlquerschnitt zusammengeführt wird.

Eine vorteilhafte , nicht beanspruchte Ausgestaltung ergibt sich dadurch, dass die diffraktiven optischen Elemente der Vorkompensationseinheit und der Kombinationseinheit übereinstimmende Dispersionseigenschaften aufweisen, insbesondere übereinstimmende Winkeldispersionen aufweisen. Insofern ist vorteilhaft, wenn sämtliche diffraktiven optischen Elemente der Vorrichtung übereinstimmende Dispersionseigenschaften haben. Dies kann beispielsweise dadurch erreicht werden, dass die Gitter der Vorkompensationseinheit und der Kombinationseinheit gleiche Gitterkonstanten aufweisen. Diese Ausgestaltung hat z.B. den Vorteil, dass die Aufweitung des Strahls durch die Vorkompensationseinheit mit der Kombinationseinheit ohne Weiteres rückgängig gemacht wird. Insofern ist die Vorrichtung dann für verschiedene Bandbreiten einsetzbar, ohne dass spezielle Anpassungen vorgenommen werden müssen. Insgesamt ergibt sich dadurch ein symmetrischer Aufbau.

Erfindungsgemäß ist es, wenn die diffraktiven optischen Elemente der Vorkompensationseinheit und die diffraktiven optischen Elemente der Kombinationseinheit voneinander abweichende Winkeldispersionen aufweisen.

Die Vorkompensationseinheit umfasst (insbesondere im Strahlengang nach dem zweiten diffraktiven optischen Element) und/oder die Kombinationseinheit (insbesondere im Strahlengang vor dem ersten diffraktiven optischen Element) eine Adaptionsoptik. Die Adaptionsoptik ist zur Änderung von Konvergenzeigenschaften und/oder von Divergenzeigenschaften und/oder einer Strahlbreite ausgebildet. Bei derartigen Ausgestaltungen ist es möglich, nicht-übereinstimmende optische Gitter zu verwenden und erforderliche optische Abstimmungen (Aufspreizung oder Konvergenz des Bündels) mittels Linsen und/oder Spiegeln durchzuführen. Beispielsweise kann die Adaptionsoptik einen oder mehrere planare Umlenkspiegel umfassen. Denkbar ist auch, dass die Adaptionsoptik ein Teleskop mit wenigstens zwei Linsenmitteln aufweist. Das Teleskop kann beispielsweise als anamorphotisches Teleskop ausgebildet sein, beispielsweise um eine inhomogene Strahlaufweitung zu erzeugen bzw. um die Strahlaufweitung nach der Vorkompensationseinheit an die Eigenschaften der Kombinationseinheit anzupassen.

Nach einem grundsätzlich vorteilhaften Aspekt der Erfindung umfasst die Vorrichtung mehrere Vorkompensationseinheiten mit jeweils einer diffraktiven Optik. Vorzugsweise ist jedem Eingangslaserstrahl eine Vorkompensationseinheit zugeordnet. Dies ermöglicht es, den Ausgangsstrahl mit einer Mehrzahl von ggf. breitbandigen Eingangslaserstrahlen zu speisen.

Es kann jedoch auch vorteilhaft sein, dass eine Vorkompensationseinheit für mehrere Eingangslaserstrahlen wirksam ist. Dies ermöglicht einen kompakten Aufbau. Zur weiteren Ausgestaltung sind die mehreren Vorkompensationseinheiten derart ausgebildet und angeordnet, dass die von den verschiedenen Vorkompensationseinheiten erzeugten Zwischenstrahlbündel sämtlich parallel zueinander verlaufen. Insofern sind vorzugsweise die oben definierten Hauptrichtungen parallel zueinander. Damit können die verschiedenen Zwischenstrahlbündel sämtlich parallel zueinander in die Kombinationseinheit eingespeist werden.

Grundsätzlich betrifft die Erfindung auch eine Vorrichtung zur Erzeugung eines Laserstrahls (nämlich den o.g. Ausgangsstrahl), umfassend wenigstens zwei Input-Laserquellen zur Abgabe je eines Eingangslaserstrahls, sowie umfassend eine Vorrichtung zur Kombination der Eingangslaserstrahlen gemäß der hierin beschriebenen Art. Bei diesen Ausgestaltungen werden insofern separate Laserzweige zu dem Ausgangsstrahl kombiniert.

Die Erfindung wird im Folgenden anhand der Figuren näher beschrieben.

Es zeigen:
- Figur 1:: skizzierte Darstellung einer Vorrichtung zur Kombination einer Mehrzahl n von breitbandigen Eingangslaserstrahlen, umfassend Vorkompensationseinheiten (skizzierte Darstellung) und eine Kombinationseinheit (skizzierte Darstellung);
- Figur 2:: skizzierte Darstellung einer beispielhaften Ausgestaltung für eine Vorrichtung mit einer Vorkompensationseinheit und einer Kombinationseinheit.

In den Figuren sowie in der folgenden Beschreibung sind für identische oder einander entsprechende Merkmale jeweils dieselben Bezugszeichen verwendet.

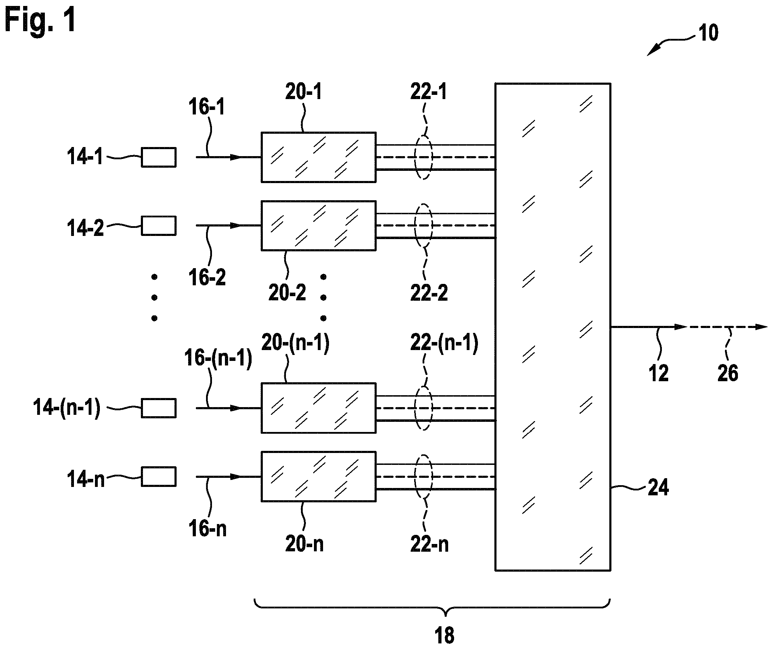

Die Figur 1 zeigt eine in ihrer Gesamtheit mit Bezugszeichen 10 bezeichnete Vorrichtung zur Erzeugung eines insbesondere hochenergetischen Laserstrahls (Ausgangstrahl 12) in einer skizzierten Darstellung. Die Vorrichtung 10 umfasst eine Mehrzahl n von Input-Laserquellen 14-1, 14-2, ... 14-n-1, 14-n, welche jeweils einen Eingangslaserstrahl 16-1, 16-2, ..., abgeben.

Jeder Eingangslaserstrahl 16-1, 16-2, ..., weist eine gewisse spektrale Bandbreite auf und umfasst insofern verschiedene Spektralkomponenten mit jeweils verschiedenen Wellenlängen λₓ. Die Vorrichtung 10 dient insbesondere zu dem Zweck, einen hochenergetischen Ausgangsstrahl 12 mit einer Strahlqualität M² bereitzustellen, die möglichst ähnlich oder entsprechend der Strahlqualität M² der einzelnen Input-Laserquellen 14-1, 14-2, ..., entspricht. Die Input-Laserquellen 14 können beispielsweise als Faserlaser ausgebildet sein, die insbesondere zur Abstrahlung in ihrer Grundmode betrieben werden und dementsprechend eine hohe Strahlqualität aufweisen. Die jeweiligen Eingangslaserstrahlen 16-1, 16-2, ... weisen beugungsbedingt stets eine gewisse intrinsische Divergenz auf, die bei Ausbreitung über größere Strecken naturgemäß zu einer Strahlverbreiterung führt. Für die Zwecke der Erläuterung der vorliegenden Erfindung soll dieser Effekt jedoch in der vorliegenden Beschreibung vernachlässigt werden.

Die Strahlung der Input-Laserquellen 14-1, ..., 14-n tritt in eine Vorrichtung 18 zur Kombination von mehreren Eingangslaserstrahlen 16-1, 16-2, ... ein. Die Vorrichtung 18 wird im Folgenden näher erläutert.

Die Vorrichtung zur Kombination der Eingangslaserstrahlen 16-1, 16-2, ... umfasst im dargestellten Beispiel mehrere Vorkompensationseinheiten 20-1, 20-2, ..., 20-n, wobei je eine der Vorkompensationseinheiten 20 im dargestellten Beispiel einem Eingangslaserstrahl 16 zugeordnet ist und nur den jeweils zugeordneten Eingangslaserstrahl 16 erfasst. Diese Ausgestaltung ist jedoch nicht zwingend, denkbar ist auch, dass eine Vorkompensationseinheit 20 mehrere Eingangslaserstrahlen 16 erfasst.

Wie nachfolgend noch im Detail erläutert, formt jede Vorkompensationseinheit 20-1, 20-2, ... den erfassten Eingangslaserstrahl 16-1, 16-2, ... in ein jeweils zugeordnetes, verbreitertes Zwischenstrahlbündel 22-1, 22-2, ... um. In dem Zwischenstrahlbündel 22 sind die Spektralkomponenten des jeweils zugeordneten Eingangslaserstrahls 16 nicht mehr in einem gemeinsamen Strahl überlagert, sondern räumlich mit steigender Wellenlänge nebeneinander verlaufend sortiert angeordnet (siehe unten).

Die Zwischenstrahlbündel 22-1, 22-2, ... verlaufen dann - ggf. über zusätzliche Adaptionsoptiken (siehe unten) - in eine Kombinationseinheit 24. Die Kombinationseinheit 24 führt die Zwischenstrahlbündel 22-1, 22-2, ... in der nachfolgend noch näher beschriebenen Art und Weise zusammen, so dass sie in eine gemeinsame Abstrahlrichtung 26 verlaufen und den Ausgangsstrahl 12 bilden. In dem Ausgangsstrahl 12 sind die Strahlungsleistungen der Eingangslaserstrahlen 16-1, 16-2, ... kombiniert und der Ausgangsstrahl 12 ist ebenso wie die Eingangslaserstrahlen 16 breitbandig (d.h. weist eine spektrale Bandbreite auf, die sämtliche spektralen Bandbreiten der Eingangslaserstrahlen 16 umfasst).

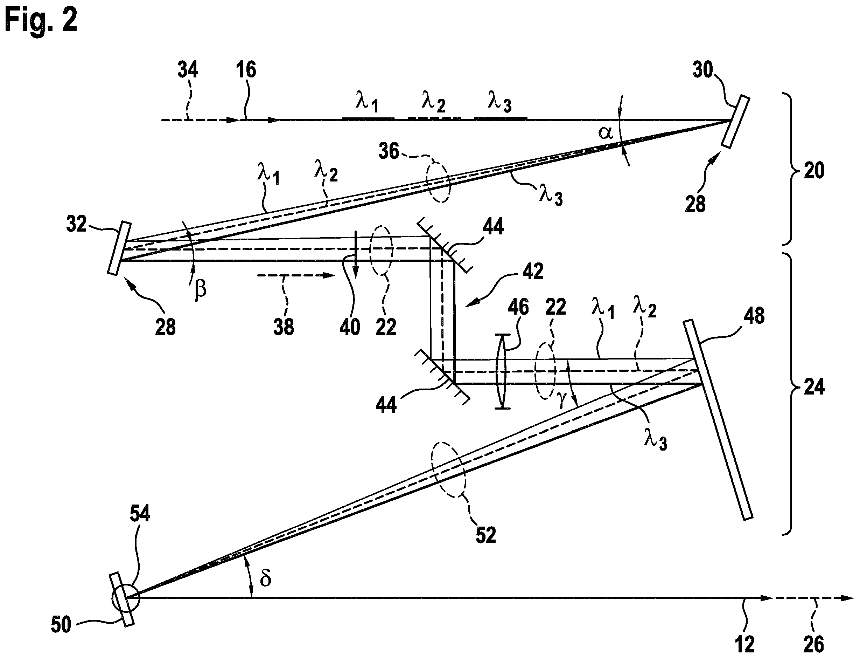

Die Figur 2 zeigt eine skizzierte Darstellung zur Erläuterung einer beispielhaften Ausgestaltung der Vorrichtung 18. Aus Gründen der Übersichtlichkeit ist in Figur 2 jedoch nur eine Vorkompensationseinheit 20 skizziert sowie eine der Vorkompensationseinheit 20 im Strahlengang nachgeordnete Kombinationseinheit 24.

Die Vorkompensationseinheit 20 hat eine diffraktive Optik 28, die im dargestellten Beispiel zwei diffraktive optische Elemente (DOE) umfasst, nämlich ein erstes diffraktives optisches Element 30 und ein im Strahlengang nachfolgendes zweites diffraktives optisches Element 32. Die diffraktiven optischen Elemente 30, 32 können beispielsweise als Beugungsgitter ausgebildet sein. Im dargestellten Beispiel wirken beide diffraktiven optischen Elemente in Reflexion, insbesondere handelt es sich um Reflexionsgitter.

Die diffraktiven optischen Elemente 30, 32 sind durch eine jeweils zugeordnete Winkeldispersion w charakterisiert. Die Winkeldispersion gibt die Änderung eines Beugungswinkels α bzw. β für einen Eingangslaserstrahl 16 in Abhängigkeit von dessen Wellenlänge λ wieder. Insofern kann die Winkeldispersion des ersten diffraktiven optischen Elements 30 definiert werden als w = dα/dλ. Entsprechend ist die Winkeldispersion des zweiten diffraktiven optischen Elements 32 definiert als w = dβ/dλ.

Der Eingangslaserstrahl 16 breitet sich vor Auftreffen auf das erste diffraktive optische Element 30 entlang einer Einstrahlrichtung 34 aus und weist im diskutierten Beispiel eine hohe Strahlqualität M² auf (intrinsische, beugungsbedingte Divergenzen werden im vorliegenden Beispiel nicht berücksichtigt, wie oben erläutert). Der Eingangslaserstrahl 16 ist breitbandig und umfasst Spektralkomponenten, von denen in Figur 2 beispielhaft drei Wellenlängen λ₁, λ₂, λ₃ angedeutet sind.

Der Eingangslaserstrahl 16 trifft mit seinen Spektralkomponenten (Wellenlängen λ₁, λ₂, λ₃) entlang der Einstrahlrichtung 34 auf das erste diffraktive optische Element 30. Aufgrund der Winkeldispersion werden die verschiedenen Spektralkomponenten mit Wellenlängen (λ₁, λ₂, λ₃) unterschiedlich an dem ersten diffraktiven optischen Element 30 gebeugt. Beispielhaft wird im Folgenden die erste Beugungsordnung betrachtet, in welche im dargestellten Beispiel ein Großteil der Strahlungsintensität übergehen soll. In Bezug auf die Einstrahlrichtung 34 werden die Spektralkomponenten mit Wellenlängen λ₁, λ₂, λ₃ somit unter verschiedenen Beugungswinkeln α(λ) gebeugt. Das erste diffraktive optische Element wandelt den Eingangslaserstrahl 16 daher durch Beugung in ein divergentes Strahlbündel 36 um. In den divergenten Strahlbündel 36 fallen die Spektralkomponenten mit den Wellenlängen (λ₁, λ₂, λ₃) somit nicht mehr in einem einzigen Laserstrahl zusammen, sondern sind räumlich aufgefächert. Dabei liegen Spektralkomponenten kleiner Wellenlänge auf einer Seite des divergenten Strahlbündels 36 und Spektralkomponenten mit großer Wellenlänge auf der gegenüberliegenden Seite des divergenten Strahlbündels 36.

Das erste diffraktive optische Element 30 und das zweite diffraktive optische Element 32 sind derart in Bezug aufeinander angeordnet und derart ausgebildet, dass die Spektralkomponenten mit Wellenlängen λ₁, λ₂, λ₃ von dem zweiten diffraktiven optischen Element 32 erfasst werden. Aufgrund der Auffächerung in dem divergenten Strahlbündel 36 treffen die verschiedenen Spektralkomponenten einerseits an verschiedenen Positionen auf das zweite diffraktive optische Element 32, und andererseits unter verschiedenen Einfallswinkeln (beispielsweise relativ zu einer Flächennormalen auf eine Oberfläche des zweiten diffraktiven optischen Elements 32 gemessen).

Das zweite diffraktive optische Element 32 ist nun derart ausgebildet, dass die verschiedenen Spektralkomponenten mit Wellenlängen λ₁, λ₂, λ₃ nach Beugung an dem zweiten diffraktiven optischen Element 32 sämtlich in eine Hauptrichtung 38 parallel zueinander verlaufen. Die Spektralkomponenten bilden somit nach Beugung an dem zweiten diffraktiven optischen Element 32 das Zwischenstrahlbündel 22, in welchem die verschiedenen Spektralkomponenten mit Wellenlängen λ₁, λ₂, λ₃ räumlich auseinandergezogen sind und parallel zueinander verlaufen. In dem Zwischenstrahlbündel 22 sind die verschiedenen Spektralkomponenten im dargestellten Beispiel entlang einer Aufweitungsrichtung 40 mit steigender Wellenlänge nebeneinander verlaufend sortiert.

Der parallele Verlauf der verschiedenen Spektralkomponenten in dem Zwischenstrahlbündel 22 kann beispielsweise dadurch erreicht werden, dass die Winkeldispersion dα/dλ des ersten diffraktiven optischen Elements 30 gleich ist, wie die Winkeldispersion dβ/dλ des zweiten diffraktiven optischen Elements 32. Das Zwischenstrahlbündel 22 weist dann insbesondere entlang der Aufweitungsrichtung 40 eine Breite auf, welche (im Bereich kleiner Winkel) im Wesentlichen proportional zur spektralen Bandbreite des Eingangslaserstrahls 16 ist.

Im dargestellten Beispiel durchläuft das Zwischenstrahlbündel 22 im Strahlengang nach dem zweiten diffraktiven optischen Element 32 eine Adaptionsoptik 42, welche (lediglich beispielhaft) ein oder mehrere Umlenkspiegel 44 (z.B. Planspiegel) und/oder ein oder mehrere Linsenmittel 46 zur Formung von Strahleigenschaften aufweisen kann.

Das Zwischenstrahlbündel 22 wird dann von der Kombinationseinheit 24 erfasst. Die Kombinationseinheit 24 dient dazu, die Mehrzahl der Zwischenstrahlbündel 22 (vgl. Figur 1) zu dem gemeinsamen Ausgangsstrahl 12 zu kombinieren. Dabei ist die Kombinationseinheit 24 derart auf die Vorkompensationseinheit 20 abgestimmt, dass die aufgeweiteten Zwischenstrahlbündel 22 nicht nur miteinander kombiniert werden, sondern auch die Strahlqualität der Eingangslaserstrahlen weitestgehend in den Ausgangsstrahl 12 erhalten bleibt. In der Figur 2 wird die Funktionsweise der Kombinationseinheit 24 beispielhaft an nur einem Zwischenstrahlbündel erläutert.

Die Kombinationseinheit 24 umfasst wiederum ein erstes diffraktives optisches Element 48 und ein im Strahlengang nachfolgendes zweites diffraktives optisches Element 50. Entsprechend zu den diffraktiven optischen Elementen 30, 32 der Vorkompensationseinheit 20 sind die diffraktiven optischen Elemente 48, 50 der Kombinationseinheit 24 durch eine Winkeldispersion charakterisiert. Im dargestellten Beispiel bezeichnet γ den Beugungswinkel am ersten diffraktiven optischen Element 48 und φ den Beugungswinkel am zweiten diffraktiven optischen Element 50. Dementsprechend werden die Winkeldispersionen w = dγ/dλ bzw. w = dδ/dλ durch das erste diffraktive optische Element 48 bzw. das zweite diffraktive optische Element 50 definiert.

Das erste diffraktrive optische Element 48 der Kombinationseinheit 24 ist derart ausgebildet, dass die Spektralkomponenten mit den verschiedenen Wellenlängen (λ₁, λ₂, λ₃) durch Beugung in ein konvergentes Strahlbündel 52 umgeformt werden, welches eine Strahltaille 54 ausbildet. Da die Spektralkomponenten mit Wellenlängen (λ₁, λ₂, λ₃) des Zwischenstrahlbündels 22 an verschiedenen Positionen auf das erste diffraktive optische Element 48 auftreffen, kann das gewünschte konvergente Strahlbündel 52 durch geeignete Abstimmung der Winkeldispersion des ersten diffraktiven optischen Elements 48 erzielt werden. Insbesondere kann hierzu die Winkeldispersion des ersten diffrakriven optischen Elements 48 übereinstimmend mit den Winkeldispersionen der diffraktiven optischen Elemente 30, 32 der Vorkompensationseinheit 20 gewählt werden.

Das zweite diffraktive optische Element 50 der Kombinationseinheit 24 ist derart ausgebildet und derart positioniert, dass die Strahltaille 54 im Wesentlichen auf einer wirksamen Oberfläche des zweiten diffraktiven optischen Elements 50 liegt. Das zweite diffraktive optische Element 50 ist dann derart ausgebildet, dass die unter verschiedenen Winkeln auftreffenden Spektralkomponenten (Wellenlängen λ₁, λ₂, λ₃) sämtlich in die Abstrahlrichtung 26 gebeugt werden und somit zu dem Ausgangsstrahl 12 vereinigt werden.

Beispielsweise kann dies wiederum dadurch erreicht werden, dass die Winkeldispersion des zweiten diffraktriven optischen Elements übereinstimmend mit den Winkeldispersionen der diffraktiven optischen Elemente 30, 32 der Vorkompensationseinheit 30 und der Winkeldispersion des ersten diffraktiven optischen Elements 48 der Kombinationseinheit 24 gewählt wird.

## Patentansprüche

1. Vorrichtung (18) zur Kombination von wenigstens zwei Eingangslaserstrahlen (16; 16-1,...,16-n) wobei der Eingangslaserstrahl (16) eine spektralen Bandbreite aufweist und dementsprechend verschiedene Spektralkomponenten mit jeweils verschiedenen Wellenlängen (λ1, λ2, λ3) umfasst, die Vorrichtung umfassend:
- zumindest eine Vorkompensationseinheit (20) für die wenigstens zwei Eingangslaserstrahlen (16), wobei die Vorkompensationseinheit (20) wenigstens eine diffraktive Optik (28) aufweist, welche den Eingangslaserstrahl (16) in ein jeweils zugeordnetes Zwischenstrahlbündel (22) aufweitet, in welchem die Spektralkomponenten räumlich mit steigender Wellenlänge (λ1, λ2, λ3) nebeneinander angeordnet verlaufen, wobei die Vorkompensationseinheit (20) wenigstens ein erstes diffraktives optisches Element (30) und im Strahlengang nachgeordnet ein zweites diffraktives optisches Element (32) aufweist;
- eine Kombinationseinheit (24) für die wenigstens zwei Zwischenstrahlbündel (22), wobei die Kombinationseinheit (24) wenigstens ein weiteres erstes diffraktives optisches Element (48) und ein im Strahlengang nachgeordnetes, weiteres zweites diffraktives optisches Element (50) umfasst,
und wobei die Kombinationseinheit (24) derart auf die Vorkompensationseinheit (20) abgestimmt ist, dass das weitere erste diffraktive optische Element (48) der Kombinationseinheit (24) jeweils ein Zwischenstrahlbündel (20) in ein konvergentes Strahlbündel (52) mit einer Strahltaille (54) umformt, wobei die Strahltaille (54) auf dem weiteren zweiten diffraktiven Element (50) der Kombinationseinheit (24) liegt,
und wobei das weitere zweite diffraktive optische Element (50) der Kombinationseinheit (24) derart ausgebildet ist, dass sämtliche einfallenden Spektralkomponenten in eine gemeinsame Abstrahlrichtung (26) gebeugt werden,
**dadurch gekennzeichnet, dass**
die diffraktiven optischen Elemente (30, 32) der Vorkompensationseinheit (20) und die diffraktiven optischen Elemente (48, 50) der Kombinationseinheit (24) voneinander abweichende Winkeldispersionen aufweisen, und wobei die Vorkompensationseinheit (20) im Strahlengang nach dem zweiten diffraktiven optischen Element (32) der Vorkompensationseinheit (20) und/oder die Kombinationseinheit (24) im Strahlengang vor dem weiteren ersten diffraktiven optischen Element (48) der Kombinationseinheit (24) eine Adaptionsoptik (42) zur Änderung von Konvergenzeigenschaften und/oder von Divergenzeigenschaften und/oder einer Strahlbreite zum Zwecke einer optischen Abstimmung der Vorkompensationseinheit (20) auf die Kombinationseinheit (24) umfasst.

2. Vorrichtung (18) gemäß Anspruch 1, wobei die Vorkompensationseinheit (20) derart ausgebildet ist, dass sämtliche Spektralkomponenten in dem Zwischenstrahlbündel (22) parallel zueinander verlaufen.

3. Vorrichtung nach Anspruch 1, wobei das erste diffraktive optische Element (30) der Vorkompensationseinheit (20) derart ausgebildet und angeordnet ist, dass die unterschiedlichen Spektralkomponenten des Eingangslaserstrahls (16) in unterschiedliche Richtungen gebeugt werden und im Strahlengang zwischen dem ersten (30) und dem zweiten (32) diffraktiven optischen Element der Vorkompensationseinheit (20) ein divergentes Strahlenbündel (36) bilden.

4. Vorrichtung (18) nach Anspruch 3, wobei das zweite diffraktive optische Element (32) der Vorkompensationseinheit (20) derart ausgebildet und angeordnet ist, dass die unterschiedlichen Spektralkomponenten des divergenten Strahlbündels (36) sämtlich in dieselbe Richtung gebeugt werden.

5. Vorrichtung (18) nach einem der vorherigen Ansprüche, wobei die Vorkompensationseinheit (20) derart ausgebildet ist, dass das Zwischenstrahlbündel (22) eine räumliche Breite aufweist, welche umso größer ist, je größer die Bandbreite des Eingangslaserstrahls (16) ist.

6. Vorrichtung (18) nach einem der Ansprüche 1 - 5, wobei das erste diffraktive optische Element (30) und das zweite diffraktive optische Element (32) der Vorkompensationseinheit (20) übereinstimmende Winkeldispersion (w) aufweisen.

7. Vorrichtung (18) nach einem der Ansprüche 1 - 6, wobei das erste diffraktive optische Element (30) und das zweite diffraktive optische Element (32) der Vorkompensationseinheit (20) als Reflexionsgitter oder als Transmissionsgitter ausgebildet sind.

8. Vorrichtung (18) nach Anspruch 7, wobei die das erste diffraktive optische Element (30) und das zweite diffraktive optische Element (32) der Vorkompensationseinheit (20) durch übereinstimmende Gitterkonstanten charakterisiert sind.

9. Vorrichtung (18) nach einem der Ansprüche 1 - 8, wobei das erste diffraktive optische Element (30) und das zweite diffraktive optische Element (32) der Vorkompensationseinheit (20) derart ausgebildet und angeordnet sind, dass bei Beugung des Eingangslaserstrahls (16) an dem ersten diffraktiven optischen Element (30) der Vorkompensationseinheit (20) eine erste Beugungsordnung der Spektralkomponenten des Eingangslaserstrahles (16) von dem zweiten diffraktiven optischen Element (32) der Vorkompensationseinheit (20) erfasst wird.

10. Vorrichtung (18) nach einem der Ansprüche 1-9, wobei die Adaptionsoptik (42) wenigstens einen insbesondere planaren Umlenkspiegel (44) aufweist.

11. Vorrichtung (18) nach einem der Ansprüche 1-10, wobei die Adaptionsoptik (42) wenigstens ein Teleskop mit wenigstens zwei Linsenmitteln (46) aufweist.

12. Vorrichtung (18) nach einem der vorherigen Ansprüche, umfassend mehrere Vorkompensationseinheiten (20-1, ..., 20-n) mit jeweils einer diffraktiven (28) Optik, wobei jedem Eingangslaserstrahl (16-1, ... 16-n) eine Vorkompensationseinheit (20-1, ..., 20-n) zugeordnet ist.

13. Vorrichtung (18) nach Anspruch 12, wobei die mehreren Vorkompensationseinheiten (20-1, ..., 20-n) derart angeordnet sind, dass die von den verschiedenen Vorkompensationseinheiten (20-1, ..., 20-n) erzeugten Zwischenstrahlbündel (22-1, ..., 22-n) parallel zueinander verlaufen.

## Claims

1. Device (18) for combining at least two input laser beams (16; 16-1, ..., 16-n), wherein the input laser beam (16) has a spectral bandwidth and accordingly comprises different spectral components having different wavelengths (λ1, λ2, λ3), the device comprising:
- at least one pre-compensation unit (20) for the at least two input laser beams (16), wherein the pre-compensation unit (20) comprises at least one diffractive optical system (28) which expands the input laser beam (16) into an associated intermediate beam bundle (22) in which the spectral components run so as to be arranged spatially next to one another with increasing wavelength (λ1, λ2, λ3), wherein the pre-compensation unit (20) comprises at least a first diffractive optical element (30) and a second diffractive optical element (32) arranged downstream in the beam path;
- a combination unit (24) for the at least two intermediate beam bundles (22), wherein the combination unit (24) comprises at least one further first diffractive optical element (48) and a further second diffractive optical element (50) arranged downstream in the beam path,
and wherein the combination unit (24) is tuned to the pre-compensation unit (20) in such a way that the further first diffractive optical element (48) of the combination unit (24) transforms each intermediate beam bundle (20) into a convergent beam bundle (52) having a beam waist (54), wherein the beam waist (54) is on the further second diffractive element (50) of the combination unit (24),
and wherein the further second diffractive optical element (50) of the combination unit (24) is designed in such a way that all incident spectral components are diffracted in a common radiation direction (26),
**characterized in that** the diffractive optical elements (30, 32) of the pre-compensation unit (20) and the diffractive optical elements (48, 50) of the combination unit (24) have angular dispersions which differ from one another, and wherein the pre-compensation unit (20), which is downstream, in the beam path, of the second diffractive optical element (32) of the pre-compensation unit (20), and/or the combination unit (24), which is upstream, in the beam path, of the further first diffractive optical element (48) of the combination unit (24), comprises an adaptation optical system (42) for changing convergence properties and/or divergence properties and/or a beam width for the purpose of optically tuning the pre-compensation unit (20) to the combination unit (24).

2. Device (18) according to claim 1, wherein the pre-compensation unit (20) is designed in such a way that all spectral components in the intermediate beam bundle (22) run parallel to one another.

3. Device according to claim 1, wherein the first diffractive optical element (30) of the pre-compensation unit (20) is designed and arranged in such a way that the different spectral components of the input laser beam (16) are diffracted in different directions and, in the beam path between the first (30) and the second (32) diffractive optical element of the pre-compensation unit (20), form a divergent beam bundle (36).

4. Device (18) according to claim 3, wherein the second diffractive optical element (32) of the pre-compensation unit (20) is designed and arranged in such a way that the different spectral components of the divergent beam bundle (36) are all diffracted in the same direction.

5. Device (18) according to any of the preceding claims, wherein the pre-compensation unit (20) is designed in such a way that the intermediate beam bundle (22) has a spatial width which is greater, the greater the bandwidth of the input laser beam (16) is.

6. Device (18) according to any of claims 1 - 5, wherein the first diffractive optical element (30) and the second diffractive optical element (32) of the pre-compensation unit (20) have matching angular dispersion (w).

7. Device (18) according to any of claims 1 - 6, wherein the first diffractive optical element (30) and the second diffractive optical element (32) of the pre-compensation unit (20) are designed as reflection grating or as transmission grating.

8. Device (18) according to claim 7, wherein the first diffractive optical element (30) and the second diffractive optical element (32) of the pre-compensation unit (20) are **characterized by** matching grating constants.

9. Device (18) according to any of claims 1 - 8, wherein the first diffractive optical element (30) and the second diffractive optical element (32) of the pre-compensation unit (20) are designed and arranged in such a way that, upon diffraction of the input laser beam (16) at the first diffractive optical element (30) of the pre-compensation unit (20), a first diffraction order of the spectral components of the input laser beam (16) is detected by the second diffractive optical element (32) of the pre-compensation unit (20).

10. Device (18) according to any of claims 1 - 9, wherein the adaptation optical system (42) comprises at least one, in particular planar, deflecting mirror (44).

11. Device (18) according to any of claims 1 - 10, wherein the adaptation optical system (42) comprises at least one telescope having at least two lens means (46).

12. Device (18) according to any of the preceding claims, comprising a plurality of pre-compensation units (20-1, ..., 20-n), each having a diffractive (28) optical system, wherein each input laser beam (16-1, ... 16-n) is assigned a pre-compensation unit (20-1, ..., 20-n).

13. Device (18) according to claim 12, wherein the plurality of pre-compensation units (20-1, ..., 20-n) are arranged in such a way that the intermediate beam bundles (22-1 , ..., 22-n) created by the different pre-compensation units (20-1, ..., 20-n) run parallel to one another.

## Revendications

1. Dispositif (18) permettant de combiner au moins deux rayonnements laser d'entrée (16 ; 16-1, ..., 16-n), dans lequel le rayonnement laser d'entrée (16) présente une largeur de bande spectrale et comprend en conséquence différentes composantes spectrales comportant respectivement différentes longueurs d'onde (λ1, λ2, λ3), le dispositif comprenant :
- au moins une unité de précompensation (20) pour les au moins deux rayonnements laser d'entrée (16), dans lequel l'unité de précompensation (20) présente au moins une optique de diffraction (28) qui élargit le rayonnement laser d'entrée (16) en un faisceau de rayonnements intermédiaire (22) respectivement associé dans lequel les composantes spectrales s'étendent spatialement les unes à côté des autres avec une longueur d'onde (λ1, λ2, λ3) croissante, dans lequel l'unité de précompensation (20) présente au moins un premier élément optique de diffraction (30) et, disposé en aval dans le trajet des rayonnements, un second élément optique de diffraction (32) ;
- une unité de combinaison (24) pour les au moins deux faisceaux de rayonnements intermédiaire (22), dans lequel l'unité de combinaison (24) comprend au moins un premier élément optique de diffraction supplémentaire (48) et un second élément optique de diffraction supplémentaire (50) disposé en aval dans le trajet des rayonnements,
et dans lequel l'unité de combinaison (24) est adaptée à l'unité de précompensation (20) de telle sorte que le premier élément optique de diffraction supplémentaire (48) de l'unité de combinaison (24) transforme respectivement un faisceau de rayonnements intermédiaire (20) en un faisceau de rayonnements convergent (52) comportant une taille minimale de rayonnements (54), dans lequel la taille minimale de rayonnements (54) se situe sur le second élément de diffraction supplémentaire (50) de l'unité de combinaison (24),
et dans lequel le second élément optique de diffraction supplémentaire (50) de l'unité de combinaison (24) est configuré de telle sorte que toutes les composantes spectrales incidentes sont diffractées dans une direction de rayonnement commune (26),
**caractérisé en ce que** les éléments optiques de diffraction (30, 32) de l'unité de précompensation (20) et les éléments optiques de diffraction (48, 50) de l'unité de combinaison (24) présentent des dispersions angulaires différentes les unes des autres, et dans lequel l'unité de précompensation (20) dans le trajet des rayonnements après le second élément optique de diffraction (32) de l'unité de précompensation (20) et/ou l'unité de combinaison (24) dans le trajet des rayonnements avant le premier élément optique de diffraction supplémentaire (48) de l'unité de combinaison (24) comprennent une optique d'adaptation (42) pour la modification de propriétés de convergence et/ou de propriétés de divergence et/ou d'une largeur de rayonnement dans le but d'une adaptation optique de l'unité de précompensation (20) avec l'unité de combinaison (24).

2. Dispositif (18) selon la revendication 1, dans lequel l'unité de précompensation (20) est configurée de telle sorte que toutes les composantes spectrales dans le faisceau de rayonnements intermédiaire (22) s'étendent parallèlement entre elles.

3. Dispositif selon la revendication 1, dans lequel le premier élément optique de diffraction (30) de l'unité de précompensation (20) est configuré et disposé de telle sorte que les différentes composantes spectrales du rayonnement laser d'entrée (16) sont diffractées dans des directions différentes et forment un faisceau de rayonnements divergent (36) dans le trajet des rayonnements entre le premier (30) et le second (32) élément optique de diffraction de l'unité de précompensation (20).

4. Dispositif (18) selon la revendication 3, dans lequel le second élément optique de diffraction (32) de l'unité de précompensation (20) est configuré et disposé de telle sorte que les différentes composantes spectrales du faisceau de rayonnements divergent (36) sont toutes diffractées dans la même direction.

5. Dispositif (18) selon l'une des revendications précédentes, dans lequel l'unité de précompensation (20) est configurée de telle sorte que le faisceau de rayonnements intermédiaire (22) présente une largeur spatiale d'autant plus grande que la largeur de bande du rayonnement laser d'entrée (16) est grande.

6. Dispositif (18) selon l'une des revendications 1 à 5, dans lequel le premier élément optique de diffraction (30) et le second élément optique de diffraction (32) de l'unité de précompensation (20) présentent des dispersions angulaires (w) concordantes.

7. Dispositif (18) selon l'une des revendications 1 à 6, dans lequel le premier élément optique de diffraction (30) et le second élément optique de diffraction (32) de l'unité de précompensation (20) sont configurés sous forme de réseau de réflexion ou de réseau de transmission.

8. Dispositif (18) selon la revendication 7, dans lequel le premier élément optique de diffraction (30) et le second élément optique de diffraction (32) de l'unité de précompensation (20) sont **caractérisés par** des constantes de réseaux concordantes.

9. Dispositif (18) selon l'une des revendications 1 à 8, dans lequel le premier élément optique de diffraction (30) et le second élément optique de diffraction (32) de l'unité de précompensation (20) sont configurés et disposés de telle sorte que, lors de la diffraction du rayonnement laser d'entrée (16) sur le premier élément optique de diffraction (30) de l'unité de précompensation (20), un premier ordre de diffraction des composantes spectrales du rayonnement laser d'entrée (16) est détecté par le second élément optique de diffraction (32) de l'unité de précompensation (20).

10. Dispositif (18) selon l'une des revendications 1 à 9, dans lequel l'optique d'adaptation (42) présente au moins un miroir de déviation (44), en particulier plan.

11. Dispositif (18) selon l'une des revendications 1 à 10, dans lequel l'optique d'adaptation (42) présente au moins un télescope comportant au moins deux moyens formant lentilles (46).

12. Dispositif (18) selon l'une des revendications précédentes, comprenant plusieurs unités de précompensation (20-1, ..., 20-n) comportant respectivement une optique de diffraction (28), dans lequel une unité de précompensation (20-1, ..., 20-n) est associée à chaque rayonnement laser d'entrée (16-1, ..., 16-n).

13. Dispositif (18) selon la revendication 12, dans lequel les unités de précompensation (20-1, ..., 20-n) sont disposées de telle sorte que les faisceaux de rayonnements intermédiaires (22-1, ..., 22-n) générés par les différentes unités de précompensation (20-1, ..., 20-n) s'étendent parallèlement entre eux.
